# EUROPÄISCHE PATENTSCHRIFT

(11) **EP 0 345 624 B1**
(45) Veröffentlichungstag und Bekanntmachung des Hinweises auf die Patenterteilung: **29.12.1993**
(21) Anmeldenummer: 89109842.8
(22) Anmeldetag: 31.05.1989
(51) Int. Cl.: H02M 3/156

(54) **Schaltungsanordnung zur Entnahme von im wesentlichen rein sinusförmigem, netzfrequentem Strom aus Wechselspannungsnetzen und zur Überführung der entnommenen elektrischen Energie in galvanisch verbundene Gleichspannungssysteme**
Circuit arrangement for drawing a practically sinusoidal current with network frequency from the network and for transferring this electric energy into a galvanically coupled DC/DC system
Circuit prélevant du réseau alternatif un courant pratiquement sinusoidal et transférant cette énergie électrique prélevée à un système DC/DC galvaniquement couplé

(30) Priorität: 09.06.1988 DE 3819685
(43) Veröffentlichungstag der Anmeldung: 13.12.1989
(73) Patentinhaber: SIEMENS AKTIENGESELLSCHAFT, 80333 München (DE)
(72) Erfinder: Bichler, Helmut, D-8032 Gräfelfing (DE); Herfurth, Michael, Dipl.-Ing., D-8031 Gilching (DE)

(56) Entgegenhaltungen:
- DE-A- 2 652 275
- DE-A- 3 310 774
- US-A- 4 677 366

## Beschreibung

Die Erfindung betrifft eine Schaltungsanordnung zur Entnahme von im wesentlichen rein sinusförmigem, netzfrequentem Strom aus Wechselspannungsnetzen und zur Überführung der entnommenen elektrischen Energie in galvanisch verbundene Gleichspannungssysteme nach dem Oberbegriff des Anspruchs 1.

Durch Gleichrichtung mit anschließender Kondensatorglättung entstehen bei getakteten Geräten in Wechselspannungsnetzen Oberwellen, die durch die pulsförmigen Kondensatorladeströme verursucht werden. Diese Oberwellen können zum einen weitere Verbraucher stören und zum anderen einen stark verzerrten Netzstrom erzeugen, der zu einer hohen Verzerrungsblindleistung und damit zu hohen Netzanscnlußwerten führt. Durch die vermehrte Verwendung von Schaltznetzteilen zur Gleichspannungserzeugung auf einem breiten Anwendungsgebiet, beispielsweise auch bei Haushaltsgeräten und bei Vorschaltgeräten für Leuchtstofflampen, ist ein Geringhalten der Störbeeinflussung unabdingbar und es wird eine möglichst sinusförmige Stromaufnahme angestrebt.

Aus der DE-OS 26 52 275 ist eine Schaltungsanordnung zur Erzeugung von Gleichspannung aus Wechselspannungsnetzen bei praktisch rein sinusförmiger Stromaufnahme bekannt. Diese besteht aus einem mit einem Querkondensator abschließenden, als Tiefpaß wirkenden Eingangsfilter, dem ein ungesteuerter Gleichrichter in Brückenschaltung, ein Gleichstrom-Hochsetzsteller und ein mit einem Querkondensator beginnendes Gleichspannungssystem folgen. Der Gleichstrom-Hochsetzsteller umfaßt einen Stellerschalter, daran anschließend eine Stellerdiode, welche die Verbindung zwischen Stellerschalter und Querkondensator bildet, und eine Speicherdrossel im Querzweig. Die Sinusform des dem Eingangsfilter zufließenden Wechselstromes, sowie dessen Amplitude und Effektivwert werden über die Vorgabe von Ein- und Auschaltdauer des Stellerschalters bewirkt. Dazu wird der Stellerschalter frühestens dann eingeschaltet, wenn durch die Speicherdrossel kein nennenswerter Strom mehr fließt. Folglich ergibt sich für den Strom in der Spule ein dreiecksförmiger Verlauf. Die Schaltfrequenz des Stellerschalters ist dabei groß gegenüber der Frequenz des speisenden Wechselstromes. Bezeichnend ist darüber hinaus, daß die Spannung des genannten Gleichspannungssystems höher ist als der periodische Scheitelwert des speisenden Wechselspannungsnetzes.

Erfahrungsgemäß muß die Spannung des Gleichspannungssystems, im folgenden Ausgangsspannung genannt, sogar erheblich über dem periodischen Scheitelwert des speisenden Wchselspannungsnetzes, im folgenden Eingangsspannung genannt, liegen. Bei vielen Anwendungen, beispielsweise beim Betrieb an in der Spannung stark schwankenden Wechselspannungsnetzen, ist es jedoch erforderlich, daß die Ausgangsspannung auch gleich der Eingangsspannung sein darf.

Auch aus der US-PS 4,677,366 ist eine gattungsgemäße Schaltungsanordnung bekannt. Bei dieser Schaltungsanordnung ist die Steuerschaltung mit einem zweiten Regelverstärker und einem diesem nachgeschalteten Pulsweitenmodulator gebildet, wobei der Pulsweitenmodulator außerdem mit einem Dreiecksignal beaufschlagt ist. Der Regelverstärker liefert ein Ausgangssignal, das der Differenz seiner beiden Eingangssignal proportional ist. Dieses Ausgangssignal wird im Pulsweitenmo dulator mittels eines Komparators mit dem Dreiecksignal verglichen. Das Ausgangssignal des Pulsweitenmodulators ist somit ein pulsweitenmoduliertes Signal, dessen Tastverhältnis proportional der Ausgangsspannung des zweiten Regelverstärkers ist. Bei der bekannten Schaltungsanordnung wird folglich eine kontinuierliche Regelung vorgenommen, was dazu führt, daß der durch die Drosselspule fließende Strom dreieckförmig um das Ausgangssignal des Multiplizierers schwankt, wobei die Frequenz dieser Schwankung sehr viel größer als die Netzfrequenz ist.

Eine Ansteuerschaltung für den Schalttransistor des Hochsetzstellers, die eine solche Steuerschaltung enthält, weist eine geringe Welligkeit des Eingangsstroms auf, was eine leichtere Funkentstörung ermöglicht. Außerdem liegt die Strombelastung der Halbleiter nur geringfügig über dem Scheitelwert des Netzstromes. Sie weist jedoch den Nachteil einer aufwendigen Dimensionierung des zweiten Regelverstärkers und des nachfolgenden Pulsweitenmodulators auf.

Der Erfindung liegt demgemäß die Aufgabe zugrunde, eine Schaltungsanordnung zur Entnahme von im wesentlichen sinusförmigem, netzfrequentem Strom aus Wechselspannungsnetzen anzugeben, die die Vorteile der bekannten Schaltung aufweist, jedoch einfacher zu dimensionieren ist.

Die Aufgabe wird durch eine Schaltungsanordnung gemäß dem Anspruch 1 gelöst.

Weiterbildung und Ausgestaltungen der Erfindung sind Gegenstand von Unteransprüchen.

Bei der Steuerschaltung der erfindungsgemäßen Schaltungsanordnung findet keine kontinuierliche Regelung statt, sondern im Prinzip eine Zweipunktregelung, wobei die Umschaltpunkte einerseits durch die Taktimpulse des Impulsgenerators und andererseits durch den Ausgangsimpuls des Komparators festgelegt werden. Das bedeutet, daß nach jedem Impuls des Impulsgenerators der Schalttransistors eingeschaltet wird, wodurch der Strom der Drosselspule ansteigt. Beim Erreichen des vorgegebenen Sollstroms, der durch das Ausgangssignal des Multiplizierers gegeben ist, wird der Schalttransistor durch das Ausgangssignal des Komparators dann wieder abgeschaltet.

Das führt dazu, daß die auftretenden Schwankungen des Drosselspulenstrom nicht das Ausgangssignal des Multiplizierers erfolgen, wie beim Gegenstand der US-PS 4,677,366, sondern daß das Ausgangssignal des Multiplizierers die Einhüllende dieser Schwankungen bildet.

Die Erfindung wird nachfolgend anhand des in den Figuren der Zeichnung dargestellten Ausführungsbeispiels näher erläutert. Es zeigt:
- Figur 1: das Blockschaltbild einer ersten Ausführungsform einer erfindungsgemäßen Schaltungsanordnung,
- Figur 2: den Verlauf des Eingangsstromes über der Zeit in einem Diagramm.

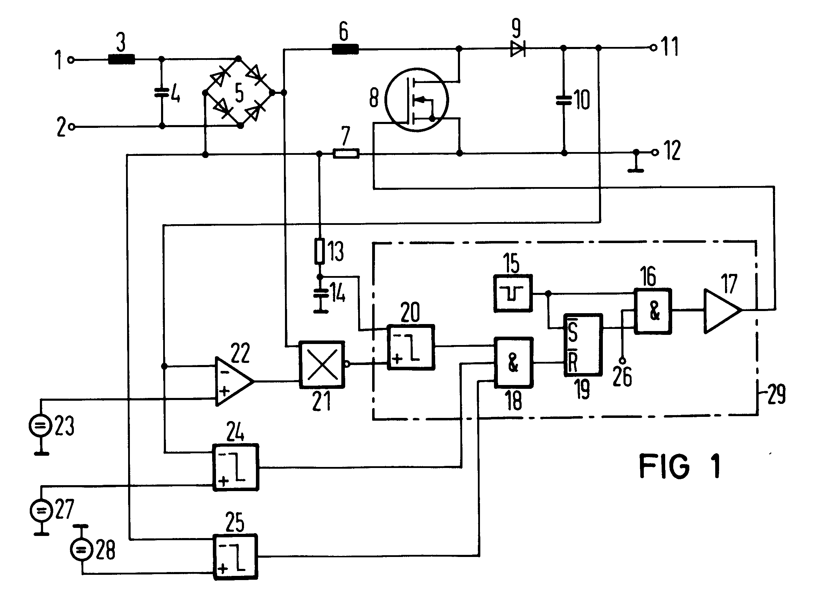

Das in Figur 1 gezeigte Ausführungsbeispiel umfaßt in bekannter Weise ein aus einer Längsinduktivität 3 und einem Querkondensator 4 bestehendes Eingangsfilter. Die Längsinduktivität 3 liegt zwischen einer ersten Eingangsspannungsklemme 1 und einem Anschluß des Querkondensators 4, dessen zweiter Anschluß mit der zweiten Eingangsspannungsklemme 2 verbunden ist. Dem Querkondensator 4 ist darüber hinaus ein Gleichrichter 4 in Brückenschaltung eingangsseitig parallel geschaltet. Einer der beiden ausgangsseitigen Anschlüsse des Gleichrichters 5 in Brückenschaltung liegt über eine Speicherdrossel 6 an dem Drainanschluß eines als Stellerschalter vorgesehenen MOS-Feldeffekttransistors 8. Der Drainanschluß des MOS-Feldeffekttransistors 8 ist zudem über eine in Durchlaßrichtung gepolte Stellerdiode 9 mit einer ersten Ausgangsspannungsklemme 11 verschaltet. Zwischen der ersten Ausgangsspannungsklemme 11 und der zweiten Ausgangsspannungsklemme 12, welche gleichzeitig Masse darstellt, liegt ein zu einem Gleichspannungssystem gehörender Querkondensator 10. Mit Masse sind außerdem der Sourceanschluß des MOS-Feldeffekttransistors 8 und ein gegenüber der bekannten Schaltungsanordnung zusätzlich eingebrachter Meßwiderstand 7, dessen zweiter Anschluß mit dem zweiten ausgangsseitigen Anschluß des Gleichrichters 5 in Brückenschaltung zusammengeführt ist, verbunden.

Zur Ansteuerung des als Stellerschalter vorgesehenen MOS-Feldeffekttransistors 8 ist der Ausgang eines Treiberverstärkers 17, welcher in Ausgestaltung der Erfindung eingangsseitig mit dem Ausgang eines ersten UND-Gatters 16 verschaltet ist, auf den Gate-Anschluß des MOS-Feldeffekttransistors geführt. Das erste UND-Gatter 16 ist über einen ersten Eingang mit dem Ausgang eines als Speicherelement dienenden RS-Flip-Flops 19, über einen zweiten Eingang mit dem Ausgang eines Impulsgenerators 15 und mit einem dritten Eingang mit einer Anschlußklemme 26 verschaltet. Der negierte Setzeingang S liegt am Ausgang des Impulsgenerators 15 und der negierte Rücksetzeingang R des RS-Flip-Flops 19 am Ausgang eines zweiten UND-Gatters 18 mit drei Eingängen, wobei jeweils einer der drei Eingänge mit dem Ausgang eines ersten Komparators 20 bzw. eines zweiten Komparators 24 bzw. eines dritten Komparators 25 verbunden ist. Der invertierende Eingang des ersten Komparators 20 ist über einen aus einem Widerstand 13 und einem Kondensator 14 bestehenden, als Tiefpaß wirkenden Glättungsfilter an den aus dem Meßwiderstand 7 und dem Gleichrichter 5 in Brückenschaltung gebildeten Knotenpunkt geführt, an dem auch der invertierende Eingang des dritten Komparators 25 anliegt. Der nicht-invertierende Eingang des ersten Komparators 20 ist mit dem invertierten Ausgang eines Multiplizierers 21 verschaltet, der eingangsseitig zum einen mit dem Ausgang eines Regelverstärkers 22 verbunden ist, und zum anderen an dem aus der Speicherdrossel 6 und dem Gleichrichter 5 in Brückenschaltung gebildeten Knotenpunkt anliegt. Der invertierende Eingang des Regelverstärkers 22 ist, ebenso wie der invertierende Eingang des zweiten Komparators 24, mit der ersten Ausgangsspannungsklemme 11 und über den nichtinvertierenden Eingang mit einer auf Masse bezogenen ersten Referenzspannungsquelle 23 verbunden. Ebenso sind die nichtinvertierenden Eingänge des zweiten und dritten Komparators 24, 25, mit je einer weiteren, an Masse liegenden Referenzspannungsquelle 27, 28 beaufschlagt.

Die Funktionsweise der gezeigten Schaltungsanordnung beruht darauf, daß der Multiplizierer 21 als Produkt aus dem Betrag des Augenblickwertes der Eingangsspannung und der Spannung am Ausgang des Regelverstärkers 22 eine Spannung liefert, welche als Sollwert zur Einstellung des durch den Meßwiderstand 7 fließenden Stromes dient. Der Regelverstärker 22 liefert dabei eine Spannung, die proportional ist zu der Differenz aus der Spannung der ersten Referenzspannungsquelle 23 und der zwischen den Klemmen 11 und 12 anliegenden Ausgangsspannung. Der erste Komparator 20 vergleicht die den Sollwert darstellende Spannung am invertierten Ausgang des Multiplizierers 21 mit der an dem Meßwiderstand 7 abfallenden, ebenfalls auf Masse bezogenen und zum Zwecke der Störunterdrückung tiefpaßgefilterten Spannung und nimmt beim Überschreiten des Sollwertes einen dem logischen Zustand "0" entsprechenden Ausgangswert an. Die an den Eingängen des ersten Komparators 20 anliegenden Spannungen weisen dabei eine gegenüber Masse gleiche Polarität auf. Führen, in Ausgestaltung der Erfindung, der zur Überspannungsüberwachung vorgesehene zweite Komparator 24 und der zur Überstromüberwachung vorgesehene dritte Komparator 25 den für ihren Ruhezustandd.h. beide Komparatoren sind nicht aktiviert - charakteristischen logischen Zustand "1", so erscheint am Ausgang des zweiten UND-Gatters 18 der logische Zustand "0", wodurch über den negierten Rücksetzeingang R das RS-Flip-Flop 19 rückgesetzt wird, d.h. der Ausgangszustand einer logischen "0" entspricht, wobei der negierte Rücksetzeingang R bei gleichzeitiger Ansteuerung beider Eingänge dominiert. Dadurch weisen aber auch jeweils der Ausgang des ersten UND-Gatters 16 und des Treiberverstärkers 17 den logischen Zustand "0" auf und der MOS-Feldeffekttransistor 8 wird gesperrt. In gleichen Zeitabständen gibt der Impulsgenerator 15 kurze, der logischen "0" entsprechende Triggerimpulse ab, wodurch das RS-Flip-Flop 19 gesetzt wird. Die beiden Eingänge des ersten UND-Gatters 16 führen nun den logischen Zustand "1", und es wird somit über den Treiberverstärker 17 der MOS-Feldeffekttransistor 8 durchgeschaltet. Der Strom durch die Spule - und damit auch der Eingangsstrom - nehmen zu, bis der Sollwert wieder überschritten und damit das RS-Flip-Flop 19 durch den ersten Komparator 20 rückgesetzt wird. Während des Setzvorganges des RS-Flip-Flops 19 auftretende Störzustände werden vorteilhafterweise durch das erste UND-Gatter 16 ausgeschlossen, da der Setzimpuls über das UND-Gatter 16 den Treiberverstärker 17 blockiert.

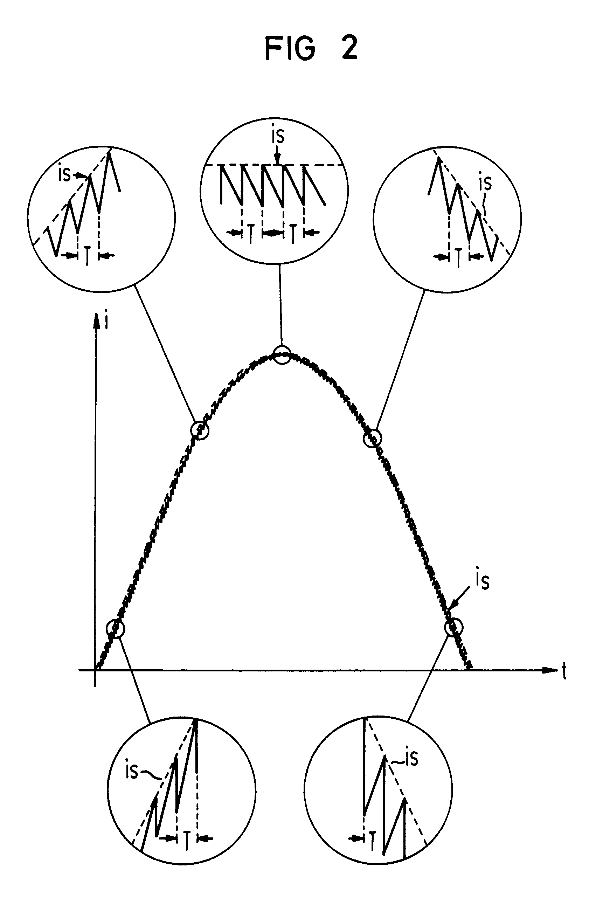

FIG 2 veranschaulicht den Stromfluß i am Eingang über der Zeit t für eine halbe Periode der Netzwechselspannung. Darin ist der dem Sollwert entsprechende Strom is gebrochen dargestellt. Vom Impulsgenerator 15 getriggert beginnt der Eingangsstrom zu steigen , bis der Sollwert erreicht ist, und fällt daraufhin wieder ab, bis jeweils nach der konstanten Zeitdauer t erneut vom Impulsgenerator 15 ein Triggerimpuls abgegeben wird. Gegenüber bekannten Schaltungsanordnungen ist bezeichnend, daß der Strom durch die Spule und damit der Strom am Eingang nach dem Erreichen des Sollwertes nicht erst zu Null zu werden braucht, um erneut ansteigen zu können, sondern in konstanten Zeitabständen getriggert wird. Es ergibt sich somit ein trapezförmiger Verlauf über dem Eingangsstrom, wodurch zum einen die Störamplituden geringer und zum anderen das Störspektrum schmaler wird. Weiterhin ist ein Betrieb bei Gleichheit von Eingangs- und Ausgangsspannung möglich. In den genannten Betriebsfällen würde bei einer bekannten Schaltungsanordnung der Strom in der Spule nicht zu Null werden und damit ein Anlaufen verhindert.

Speicherdrossel 6, Querkondensator 10 des Gleichspannungssystems und Impulsfolgefrequenz des Impulsgenerators 15 sind derart zu dimensionieren, daß die Periodendauer der Impulsfolgefrequenz klein ist gegenüber der Abklingdauer des Stromes durch die Speicherdrossel. Dabei ist die Impulsfolgefrequenz des Impulsgenerators konstant und groß gegenüber der Frequenz des speisenden Wechselstromes. Die Abklingdauer des Stromes durch die Speicherdrossel ist darüber hinaus bekannterweise klein gegenüber der Periodendauer des speisenden Wechselstromes. Der zweite und dritte Komparator 24 und 25 sind vorteilhafterweise in Verbindung mit dem dritten UND-Gatter 18, sowie der entsprechenden Referenzspannungsquelle 27, 28 zum Schutze des MOS-Feldeffekttransistors 8 vor einer Überspannung zwischen den Ausgangsspannungsklemmen 11 und 12 bzw. vor einem Überstrom zwischen Sourceanschluß und Drainanschluß vorgesehen und entsprechend den maximal zulässigen Belastungen des MOS-Feldeffekttransistors 8 ausgelegt. Die Anschlußklemme 26 ist zur externen Ansteuerung vorgesehen und kann beispielsweise mit weiteren, zum Schutze der Schaltungsanordnung dienenden Einrichtungen verwendet werden. Im Betriebsfall liegt an ihr eine der logischen "1" entsprechende Spannung an.

Abschließend sei noch bemerkt, daß zur Speisung der Komparatoren, der Verstärker, des Multiplizierers und der Logik eine eigene Stromversorgung benötigt wird, die jedoch in dem Ausführungsbeispiel nicht näher erläutert wird. Darüber hinaus sei darauf hingewiesen, daß weitere Ausführungsformen, insbesondere der Logik einschließlich der Komparatoren beispielsweise durch Anwenden der Boole'schen Algebra, durch Umpolung der auftretenden Spannungen und/oder durch alternative, externe Beschaltung unter Beibehaltung der Gesamtfunktion entstehen.

## Patentansprüche

1. Schaltungsanordnung zur Entnahme von im wesentlichen rein sinusförmigem, netzfrequentem Strom aus Wechselspannungsnetzen und zur Überführung der entnommenen Energie in galvanisch verbundene Gleichspannungssysteme,
bei der den beiden Klemmen (1, 2) des speisenden Wechselspannungsnetzes nacheinander ein mit einem Querkondensator (4) abschließendes, als Tiefpaß wirkendes Eingangsfilter, ein ungesteuerter Gleichrichter (5) in Brückenschaltung, ein Gleichstrom-Hochsetzsteller (6, 8, 9) und ein mit einem Querkondensator (10) beginnendes Gleichspannungssystem nachgeschaltet sind,
bei der die Umschaltfrequenz eines Stellerschalters (8) des Gleichstrom-Hochsetzstellers (6, 8, 9) groß ist gegenüber der Frequenz des speisenden Wechselspannungsnetzes,
bei der die Sinusform des dem Eingangsfilter zufließenden Wechselstroms über die Vorgabe jenes Zeitintervalls während dessen der Stellerschalter (8) elektrisch leitend ist, und/oder über die Vorgabe jenes Zeitintervalls während dessen der Stellerschalter gesperrt ist, bewirkt wird,
bei der die Amplitude und der Effektivwert des dem Eingangsfilter zufließenden Wechselstroms über die Vorgabe der Einschaltdauer und/oder über die Vorgabe der Ausschaltdauer des Stellerschalters eingestellt wird,
bei der der elektronische Stellerschalter (8) über seinen Steuereingang mit dem Ausgang einer Ansteuerschaltung verbunden ist, die
aus einem Regelverstärker (22), dessen erster Eingang an einer Referenzspannungsquelle (23) und dessen zweiter Eingang an dem von einer Stellerdiode (9) des Gleichstrom-Hochsetzstellers (6, 8, 9) und dem Querkondensator (10) des Gleichspannungssystems gebildeten Knotenpunkt angeschlossen ist, wobei das Ausgangssignal dieses Regelverstärkers (22) proportional der Differenz der beiden Eingangssignale ist,
aus einem Multiplizierer (21), dessen erster Eingang mit dem Ausgang des Regelverstärkers (22) und dessen zweiter Eingang mit dem aus dem Gleichrichter (5) in Brückenschaltung und einer Speicherdrossel (6) des Gleichstrom-Hochsetzstellers (6, 8, 9) gebildeten Knotenpunkt verschaltet ist,
und aus einer Steuerschaltung (29), deren erster Eingang mit dem Ausgang des Multiplizierers (21) und deren zweiter Eingang mit einer Strommeßeinrichtung (2, 13, 14) zur Ermittlung des durch den Hochsetzsteller fließenden Stromes verbunden ist, wobei das Ausgangssignal der Steuerschaltung (29) ein pulsweitenmoduliertes Signal ist, dessen Pulsweite von der Differenz der beiden Eingangssignale der Steuerschaltung (29) abhängt, besteht,
**dadurch gekennzeichnet,**
daß die Steuerschaltung (29)
aus einem Komparator, dessen Eingänge die Eingänge der Steuerschaltung (29) bilden,
aus einem Speicherelement (19) mit einem gegenüber dem Setzeingang (S) dominanten Rücksetzeingang (R), dessen Rücksetzeingang (R) an den Ausgang des Komparators (20) und dessen Setzeingang (S) an den Ausgang eines Impulsgenerators (15) angeschlossen ist,
und aus einem Treiberverstärker (17), der zwischen dem Ausgang des Speicherelementes (19) und dem Steuereingang des elektronischen Stellerschalters (8) liegt, besteht,
daß der Impulsgenerator (15) eine feste und gegenüber der Frequenz des speisenden Wechselspannungsnetzes hohe Impulsfolgefrequenz aufweist, deren Periodendauer klein ist gegenüber der Abklingdauer des Stromes durch die Speicherdrossel (6),
daß das durch den Impulsgenerator (15) gesetzte Speicherelement durch den Komparator (20) rückgesetzt wird, wenn der Betrag der Spannung an dem ersten Eingang des Komparators (20) kleiner ist als der Betrag der Spannung an seinem zweiten Eingang
und daß der Stellerschalter bei gesetztem Speicherelement (20) elektrisch leitend und bei rückgesetztem Speicherelement (20) gesperrt ist.

2. Schaltungsanordnung nach Anspruch 1, **dadurch gekennzeichnet**, daß der elektronische Stellerschalter (8) mit einer Überwachungseinrichtung zum Schutze vor Überspannung und Überstrom verbunden ist.

3. Schaltungsanordnung nach einem der Ansprüche 1 und 2, **dadurch gekennzeichnet**, daß der Ausgang des Speicherelements (19) zunächst auf einen ersten Eingang eines UND-Gatters (16) und dessen Ausgang wiederum auf den Eingang des Treiberverstärkers (17) geführt ist, daß ein zweiter Eingang des UND-Gatters (16) derart mit dem Ausgang des Impulsgenerators verschaltet ist, daß der Stellerschalter (8) während des Setzens des Speicherelements (19) gesperrt ist und daß ein dritter Eingang des UND-Gatters (16) zur externen Ansteuerung vorgesehen ist.

4. Schaltungsanordnung nach einem der Ansprüche 1 bis 3,
**dadurch gekennzeichnet,** daß die Strommeßeinrichtung (7, 13, 14) zur Ermittlung des durch den Hochsetzsteller fließenden Stroms mit einem als Tiefpaß wirkenden Glättungsfilter (13, 14) gebildet ist.

## Claims

1. Circuit arrangement for drawing an essentially purely sinusoidal, line-frequency current from AC voltage networks and for transferring the energy drawn into electrically directly coupled DC voltage systems, in which there are connected one after another downstream of the two terminals (1, 2) of the feeding AC voltage network an input filter, which is terminated by a parallel capacitor (4) and acts as a low pass filter, an uncontrolled rectifier (5) in a bridge circuit, a DC step-up converter (6, 8, 9) and a DC voltage system which starts with a parallel capacitor (10), in which arrangement the switching rate of a converter switch (8) of the DC step-up converter (6, 8, 9) is high with respect to the frequency of the feeding AC voltage network, in which arrangement the sinusoidal shape of the AC current flowing to the input filter is effected via the stipulation of that time interval during which the converter switch (8) is electrically conductive, and/or via the stipulation of that time interval during which a converter switch is blocked, in which arrangement the amplitude and the R.M.S. value of the AC current flowing to the input filter are set via the stipulation of the ON duration and/or via the stipulation of the OFF duration of the converter switch, in which arrangement the electronic converter switch (8) is connected via its control input to the output of a drive circuit which comprises a control amplifier (22) whose first input is connected to a reference voltage source (23) and whose second input is connected to the nodal point formed by an converter diode (9) of the DC step-up converter (6, 8, 9) and the parallel capacitor (10) of the DC voltage system, the output signal of this control amplifier (22) being proportional to the difference between the two input signals, a multiplier (21) whose first input is connected to the output of the control amplifier (22) and whose second input is connected to the nodal point formed by the rectifier (5) in a bridge circuit and a storage inductor (6) of the DC step-up converter (6, 8, 9), and a control circuit (29) whose first input is connected to the output of the multiplier (21) and whose second input is connected to a current-measuring device (2, 13, 14) for determining the current flowing through the step-up converter, the output signal of the control circuit (29) being a pulse-width-modulated signal whose pulse width depends on the difference between the two input signals of the control circuit (29), characterized in that the control circuit (29) comprises a comparator whose inputs form the inputs of the control circuit (29), a storage element (19) which has a resetting input (R) that is dominant with respect to the setting input (S) and whose resetting input (R) is connected to the output of the comparator (20) and whose setting input (S) is connected to the output of a pulse generator (15), and a driver amplifier (17) which is connected between the output of the storage element (19) and the control input of the electronic converter switch (8), in that the pulse generator (15) has a fixed pulse repetition frequency which is high with respect to the frequency of the feeding AC voltage network and whose period is small with respect to the decay period of the current through the storage inductor (6), in that the storage element set by the pulse generator (15) is reset by the comparator (20) when the absolute value of the voltage at the first input of the comparator (20) is smaller than the absolute value of the voltage at its second input, and in that the converter switch is electrically conductive when the storage element (20) is set and blocked when the storage element (20) is reset.

2. Circuit arrangement according to Claim 1, characterized in that the electronic converter switch (8) is connected to a monitoring device for protecting against overvoltage and overcurrent.

3. Circuit arrangement according to one of Claims 1 and 2, characterized in that the output of the storage element (19) is firstly led to a first input of an AND gate (16) and whose output is led, in turn, to the input of the driver amplifier (17), in that a second input of the AND gate (16) is connected to the output of the pulse generator in such a way that the converter switch (8) is blocked during the setting of the storage element (19), and in that a third input of the AND gate (16) is provided for external driving.

4. Circuit arrangement according to one of Claims 1 to 3, characterized in that the current-measuring device (7, 13, 14) for determining the current flowing through the step-up converter is formed with a smoothing filter (13, 14) acting as a lowpass filter.

## Revendications

1. Montage pour prélever du courant à fréquence de secteur, de forme sensiblement purement sinusoïdale, à partir de réseaux à tension alternative et pour transférer l'énergie prélevée dans des systèmes à tension continue, qui sont couplés galvaniquement,
dans lequel, en aval des deux bornes (1,2) du réseau d'alimentation à tension alternative, sont branchés successivement un filtre d'entrée, qui agit en tant que filtre passe-bas et qui est terminé par un condensateur transversal (4), un redresseur (5) non commandé et formé d'un circuit en pont, un dispositif (6,8,9) de réglage de régime élevé à courant continu et un système à tension continue, qui commence avec un condensateur transversal (10), et
dans lequel la fréquence de commutation d'un commutateur (8) du dispositif (6,8,9) de réglage de régime élevé à courant continu est élevée par rapport à la fréquence du réseau d'alimentation à tension alternative, et
dans lequel la forme sinusoïdale du courant alternatif relié au filtre d'entrée est obtenue par l'intermédiaire de la prédétermination de l'intervalle de temps, pendant lequel le commutateur (8) est électriquement conducteur, et/ou par l'intermédiaire de la prédétermination de l'intervalle de temps, pendant lequel le commutateur est bloqué, et
dans lequel l'amplitude et la valeur efficace du courant alternatif envoyé au filtre d'entrée sont réglées au moyen de la prédétermination de la durée de fermeture et/ou au moyen de la prédétermination de la durée d'ouverture du commutateur, et
dans lequel le commutateur électronique (8) est relié, par l'intermédiaire de son entrée de commande, à la sortie d'un circuit de commande, qui est constitué
d'un amplificateur de réglage (22), dont la première entrée est reliée à une source de tension de référence (23) et dont la seconde entrée est reliée au noeud formé par une diode (9) du dispositif (6,8,9) de réglage de régime élevé en courant continu et par le condensateur transversal (10) du système à tension continue, le signal de sortie de cet amplificateur de réglage (22) étant proportionnel à la différence entre les deux signaux d'entrée,
d'un multiplicateur (21), dont la première entrée est reliée à la sortie de l'amplificateur de réglage (22) et dont la seconde entrée est reliée au noeud formé par le redresseur (5) formé d'un circuit en pont et par une bobine d'accumulation (6) du dispositif (6,8,9) de réglage de régime élevé à courant continu, et
d'un circuit de commande (29), dont la première entrée est reliée à la sortie du multiplicateur (21) et dont la seconde entrée est reliée à un dispositif ampèremétrique (2,13,14) servant à déterminer le courant traversant le dispositif de réglage de régime élevé, le signal de sortie du circuit de commande (29) étant un signal modulé selon une modulation d'impulsions en durée, dont la durée des impulsions dépend de la différence entre les deux signaux d'entrée du circuit de commande (29),
caractérisé par le fait
que le circuit de commande (29) est constitué
d'un comparateur, dont les entrées forment les entrées du circuit de commande (29),
d'un élément de mémoire (19), qui comporte une entrée de remise à l'état initial (R) qui est dominante par rapport à l'entrée de positionnement (S), l'entrée de remise à l'état initial (R) étant reliée à la sortie du comparateur (20), tandis que l'entrée de positionnement (S) est reliée à la sortie d'un générateur d'impulsions (15), et
d'un amplificateur d'attaque (17), qui est branché entre la sortie de l'élément de mémoire (19) et l'entrée de commande du commutateur électronique (8),
que le générateur d'impulsions (15) possède une fréquence fixe de récurrence des impulsions, qui est élevée par rapport à la fréquence du réseau d'alimentation à tension alternative, et dont la durée de la période est petite par rapport à la durée de retombée du courant à travers la bobine d'accumulation (6),
que l'élément de mémoire positionné par le générateur d'impulsions (15) est ramené à l'état initial par le comparateur (20), lorsque la valeur absolue de la tension appliquée à la première entrée du comparateur (20) est inférieure à la valeur absolue de la tension appliquée à sa seconde entrée, et
que le commutateur est électriquement conducteur lorsque l'élément de mémoire (19) est positionné, et est bloqué lorsque l'élément de mémoire (19) est ramené à l'état initial.

2. Montage suivant la revendication 1, caractérisé par le fait que le commutateur électronique (8) est relié à un dispositif de contrôle servant à réaliser une protection vis-à-vis d'une surtension et d'une surintensité.

3. Montage suivant l'une des revendications 1 et 2, caractérisé par le fait que la sortie de l'élément de mémoire (19) est reliée tout d'abord à une première entrée d'une porte ET (16) et que la sortie de cette porte est reliée à nouveau à l'entrée de l'amplificateur d'attaque (17), qu'une deuxième entrée de la porte (16) est connectée à la sortie du générateur d'impulsions de telle sorte que le commutateur (8) est bloqué pendant le positionnement de l'élément de mémoire (19) et qu'une troisième entrée de la porte ET (16) est prévue pour la commande externe.

4. Montage suivant l'une des revendications 1 à 3, caractérisé par le fait que le dispositif ampèremétrique (7,13,14) servant à déterminer le courant traversant le dispositif de réglage de régime élevé est formé par un filtre de lissage (13,14) agissant en tant que filtre passe-bas.
